# EUROPEAN PATENT APPLICATION

(11) **EP 4 832 130 A1**
(43) Date of publication of application: **28.10.2026**
(21) Application number: 25216354.8
(22) Date of filing: 17.11.2025
(51) Int. Cl.: H01M 10/0525, H01M 10/42, H01M 10/44

(54) **SECONDARY BATTERY AND PREPARATION METHOD THEREOF, ENERGY STORAGE SYSTEM, AND POWER SUPPLY DEVICE**

(30) Priority: 24.04.2025 CN 202510519125
(71) Applicant: Zhejiang Jinko Energy Storage Co., Ltd., Jiaxing, Zhejiang (CN)
(72) Inventor: YANG, Zixiang, Huangwan Town, Haining City, Jiaxing, Zhejiang (CN); HONG, Yu, Huangwan Town, Haining City, Jiaxing, Zhejiang (CN); LUAN, Xiangsen, Huangwan Town, Haining City, Jiaxing, Zhejiang (CN); ZHANG, Luhua, Huangwan Town, Haining City, Jiaxing, Zhejiang (CN)
(74) Representative: Daub, Thomas

(57) **Abstract**

Provided is a secondary battery and a preparation method thereof, an energy storage system, and a power supply device, which help to solve the influence caused by gas generation of a lithium replenishment agent. The method includes: providing a battery, where a lithium replenishment agent of the battery has a first charging plateau and a second charging plateau; charging the battery at a first current to form a SEI; performing a first formation and exhausting gas process, where the battery is charged at a second current to a preset cut-off voltage and subjected subsequently to at least one breathing-like exhausting gas process; performing an activation process, where the battery is charged continuously at the second current to the minimum value of the first charging plateau; performing a second formation and exhausting gas process, where the battery is charged at a third current to the maximum value of the first charging plateau and subjected subsequently to at least one breathing-like exhausting gas process; performing a third formation and exhausting gas process, where the battery is charged at the first current to the maximum value of the second charging plateau, while subjecting to at least one breathing-like exhausting gas process; and charging the battery at the third current to a cut-off voltage.

## Description

### TECHNICAL FIELD

The present disclosure relates to the technical field of lithium ion battery, and in particular, to a secondary battery and a preparation method thereof, an energy storage system, and a power supply device.

### BACKGROUND

During the initial charging process of a lithium ion battery, the organic electrolyte may be reductively decomposed on surface of the negative electrode (such as graphite) to form a solid electrolyte interface membrane (SEI), which permanently consumes a large amount of lithium from the positive electrode, resulting in a lower initial Coulombic efficiency (ICE), and thus reducing capacity and energy density of the lithium ion battery. In an energy storage system, it can be seen from an analysis of long-term cycle capacity degradation that loss of active lithium is a critical factor leading to a short cycle life.

### SUMMARY

Some embodiments of the present disclosure provide a secondary battery and a preparation method thereof, an energy storage system, and a power supply device, which solve the influence caused by gas generation of a lithium replenishment agent based on activation characteristics of the lithium replenishment agent.

According to some embodiments of the present disclosure, in one aspect, some embodiments of the present disclosure provide a preparation method for a secondary battery, including: providing a battery, where the battery includes a lithium replenishment agent with a first charging plateau and a second charging plateau, the first charging plateau refers to a voltage range corresponding to the lithium replenishment agent reaching a first decomposition plateau, the second charging plateau refers to voltage range corresponding to the lithium replenishment agent reaching a second decomposition plateau, and a minimum value of the second charging plateau is greater than or equal to a maximum value of the first charging plateau; charging the battery at a first current to form a solid electrolyte interface membrane (SEI); performing a first formation and exhausting gas process, where the battery is charged at a second current to a preset cut-off voltage and subjected subsequently to at least one breathing-like exhausting gas process, where the breathing-like exhausting gas process includes increasing internal pressure of the battery to a first positive pressure and reducing to a first negative pressure, and the preset cut-off voltage is lower than a minimum value of the first charging plateau; performing an activation process, where the battery is charged continuously at the second current to the minimum value of the first charging plateau; performing a second formation and exhausting gas process, where the battery is charged at a third current to the maximum value of the first charging plateau and subjected subsequently to at least one breathing-like exhausting gas process; performing a third formation and exhausting gas process, where the battery is charged at the first current to the maximum value of the second charging plateau, while subjecting to at least one breathing-like exhausting gas process; and charging the battery at the third current to a cut-off voltage.

In some embodiments, in the step of the first formation and exhausting gas process, a number of the breathing-like exhausting gas process is represented as a first number of times; in the step of the second formation and exhausting gas process, a number of the breathing-like exhausting gas process is represented as a second number of times; and in the step of the third formation and exhausting gas process, a number of the breathing-like exhausting gas process is represented as a third number of times, where the third number of times is greater than the first number of times, and/or the third number of times is greater than the second number of times.

In some embodiments, a ratio of the third number of times to the second number of times is represented as a first ratio. A gas generation amount of the lithium replenishment agent at the first charging plateau is represented as a first gas generation amount, a gas generation amount of the lithium replenishment agent at the second charging plateau is represented as a second gas generation amount, and a ratio of the second gas generation amount to the first gas generation amount is represented as a second ratio. The first ratio is greater than or equal to the second ratio.

In some embodiments, a difference between the minimum value of the first charging plateau and the preset cut-off voltage is greater than 0 and less than or equal to 0.5.

In some embodiments, in step of forming the SEI, the internal pressure of the battery is represented as an initial negative pressure; and in step of performing the activation process, the internal pressure of the battery is represented as a second negative pressure, where an absolute value of the second negative pressure is less than an absolute value of the initial negative pressure.

In some embodiments, the initial negative pressure is -80 Kpa ± 20 Kpa; and the second negative pressure is -40 Kpa ± 20 Kpa.

In some embodiments, the second current is greater than the first current.

In some embodiments, the third current is less than the second current and greater than the first current.

In some embodiments, the first current ranges from 0.02 C to 0.1 C; the second current ranges from 0.2 C to 0.4 C; and the third current ranges from 0.1 C to 0.3 C.

In some embodiments, an absolute value of the first positive pressure is less than an absolute value of the first negative pressure.

In some embodiments, the first positive pressure is 0 Kpa ± 20 Kpa; and the first negative pressure is -80 Kpa ± 20 Kpa.

According to some embodiments of the present disclosure, in another aspect, some embodiments of the present disclosure provide a secondary battery, where the secondary battery is prepared by using the preparation method for a secondary battery according to the foregoing embodiments.

According to some embodiments of the present disclosure, in still another aspect, some embodiments of the present disclosure provide an energy storage system, including a plurality of secondary batteries according to the foregoing embodiments.

According to some embodiments of the present disclosure, in yet another aspect, some embodiments of the present disclosure provide a power supply device, where the power supply device includes the secondary battery according to the foregoing embodiments or the energy storage system according to the foregoing embodiments.

The technical solutions provided in some embodiments of the present disclosure possess at least the following advantages:
In the preparation method for a secondary battery provided in some embodiments of the present disclosure, the initial charging process of the secondary battery is divided into several stages depending on the charging plateaus corresponding to decomposition plateaus of the lithium replenishment agent. The breathing-like exhausting gas process is performed respectively for different stages, to ensure that gas generated at each stages is promptly exhausted from the battery, and thus ensuring sufficient infiltration of electrolyte into electrode plate, and preventing interface defects caused by gas generation, such as black spots or lithium plating. The voltage range corresponding to the lithium replenishment agent reaching the first decomposition plateau is represented as the first charging plateau, and the voltage range corresponding to the lithium replenishment agent reaching the second decomposition plateau is represented as the second charging plateau. Before the battery is charged to the first charging plateau, a SEI is formed, and then the battery is charged to the preset cut-off voltage closed to the minimum value of the first charging plateau. Then, the battery is subjected to at least one the breathing-like exhausting gas process to exhaust gas generated during the previous SEI formation process. From the activation process to completing the stage of the first charging plateau, the battery is subjected to at least one the breathing-like exhausting gas process to exhaust gas generated at the stage of the first charging plateau. During the stage of the second charging plateau, least one the exhausting gas process is performed, where the generated gas is exhausted in real time as the stage of the second charging plateau progresses. Due to different gas generation situations at different stages, the first charging process of the secondary battery is divided into several stages depending on the first charging plateau and the second charging plateau, enabling targeted breathing-like exhausting gas processes to be performed at different stages, thereby ensuring fully smooth progress of each stage, and preventing influence caused by gas generation at each stage.

### BRIEF DESCRIPTION OF DRAWINGS

One or more embodiments are exemplarily described by using figures that are corresponding thereto in the accompanying drawings. The exemplary descriptions do not constitute limitations on the embodiments. Unless otherwise particularly stated, the figures in the accompanying drawings do not constitute a scale limitation. In order to more clearly illustrate the technical solutions in embodiments of the present disclosure or the conventional art, the accompanying drawings used in the description of the embodiments or the conventional art will be briefly introduced below. It is apparent that, the accompanying drawings in the following description are only some embodiments of the present disclosure, and other drawings can be obtained by those of ordinary skill in the art from the provided drawings without creative efforts.
FIG. 1 is a flowchart of a preparation method for a secondary battery according to some embodiments of the present disclosure;
FIG. 2 is a schematic diagram of electrolyte reflux according to some embodiments of the present disclosure;
FIG. 3 is a trend chart of electrolyte level changes in the initial charging process of battery 1;
FIG. 4 is a schematic diagram of an interface of negative electrode of battery 1; and
FIG. 5 is a schematic diagram of an interface of negative electrode of battery 2.

### DESCRIPTION OF EMBODIMENTS

To solve the problem of loss of active lithium, a "pre-lithiation" technology may be employed. Among various pre-lithiation technologies, adding a lithium replenishment agent compensates for the loss of active lithium. Moreover, the lithium replenishment agent has high compatibility with the existing production lines, and has advantages such as a relatively low cost and good economic benefits, making it the most promising method for practical applications. However, the addition of the lithium replenishment agent to replenish lithium may also cause a series of gas generation problems. In the formation process, a SEI formed and bubbles generated during activing the lithium replenishment agent hinder migration of lithium ions from positive electrode to negative electrode, which may even cause electrolyte disconnection in a severe case, resulting in problems such as black spots or lithium plating appear at charging interface of the negative electrode, and thus leading to performance degradation of the battery.

However, in a conventional formation process, gas generated by activing the lithium replenishment agent cannot be promptly and sufficiently exhausted. Therefore, a targeted optimization depending on activation characteristics of the lithium replenishment agent is required.

For example, a lithium-rich lithium iron oxide (Li₅FeO₄) serves as a lithium replenishment agent for a secondary battery. Release of active lithium from Li₅FeO₄ in the initial cycle involves two decomposition plateaus. The first decomposition plateau is a twophase reaction, with a reaction formula of Li₅FeO₄ → Li₃FeO_{3.5} + 0.25O₂ (gas) + 2Li⁺ + 2e⁻. In the first decomposition plateau, Li₅FeO₄ transforms into pseudo-cubic Li₃FeO_{3.5}. A first charging plateau corresponding to the first decomposition plateau is generally in a range of 3.5 V to 3.8 V. The second decomposition plateau is a single-phase reaction with a reaction formula of Li₃FeO_{3.5} → LiFeO₂ + 0.75O₂ (gas) + 2Li⁺ + 2e⁻. In the second decomposition plateau, pseudo-cubic Li₃FeO_{3.5} transforms into another pseudo-cubic LiFeO₂. A second charging plateau corresponding to the second decomposition plateau is generally in a range of 3.8 V to 4.1 V. Oxygen is produced at the both two stages of Li₅FeO₄, which causes an oxidative decomposition of some components in electrolyte to generate carbon dioxide and water, thereby triggering a series of gas-producing reactions that release a large amount of carbon dioxide and hydrogen, and thus leading to battery swelling to hinder the application of lithium-rich Li₅FeO₄ as a lithium replenishment agent for a secondary battery.

Some embodiments of the present disclosure provide a secondary battery and a preparation method thereof, an energy storage system, and a power supply device, which facilitate overcoming the influence caused by gas generation from a lithium replenishment agent based on activation characteristics of the lithium replenishment agent.

In the description of the embodiments of the present disclosure, the technical terms such as "first" and "second" are used only to distinguish different objects, and cannot be understood as indicating or implying relative importance or implicitly indicating a quantity, a specific order or a primary-secondary relationship of the indicated technical features.

In the description of the embodiments of the present disclosure, "a plurality of" means two or more, unless otherwise defined explicitly and specifically.

An "Embodiment" as referred to herein means that particular features, structures or characteristics described with reference to the embodiments may be included in at least one embodiment of the present disclosure. A phrase appearing at various positions of the specification does not always refer to the same embodiment, nor separate or alternative embodiment that is mutually exclusive with other embodiment. It is explicitly and implicitly understood by those skilled in the art that the embodiments described herein may be combined with other embodiments.

In the description of the embodiments of the present disclosure, the term "and/or" herein is merely an association relationship describing associated objects, indicating that three relationships may exist. For example, A and/or B may indicate that there are three cases of A alone, A and B together, and B alone. In addition, the character "/" herein generally means that the associated objects are in an "or" relationship.

The embodiments of the present disclosure will be described in detail below with reference to the accompanying drawings. However, those of ordinary skill in the art may understand that, in the embodiments of the present disclosure, numerous technical details are set forth in order to enable a reader to better understand the present disclosure. However, the technical solutions claimed in the present disclosure can be implemented without these technical details and various changes and modifications based on the embodiments below.

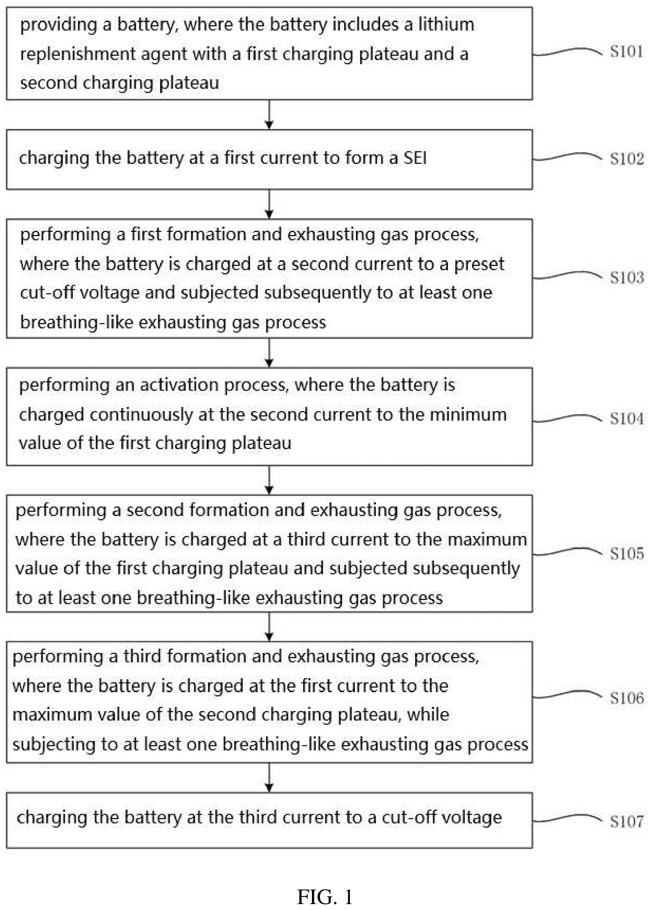

FIG. 1 is a flowchart of a preparation method for a secondary battery according to some embodiments of the present disclosure.

Referring to FIG. 1, some embodiments of the present disclosure provide a preparation method for a secondary battery, including:
S101, providing a battery, where the battery includes a lithium replenishment agent with a first charging plateau and a second charging plateau, the first charging plateau refers to a voltage range corresponding to the lithium replenishment agent reaching a first decomposition plateau, the second charging plateau refers to voltage range corresponding to the lithium replenishment agent reaching a second decomposition plateau, and a minimum value of the second charging plateau is greater than or equal to a maximum value of the first charging plateau.

The battery refers to at least one cell used in the preparation method for a secondary battery.

The lithium replenishment agent includes at least one of Li₅FeO₄, Li₂NiO₂, and Li₂O₂.

The lithium replenishment agent reaching a decomposition plateau means different stages of decomposition of the lithium replenishment agent. Taking Li₅FeO₄ as an example, a process in which Li₅FeO₄ transforms into pseudo-cubic Li₃FeO_{3.5} is a first decomposition plateau; and a process in which pseudo-cubic Li₃FeO_{3.5} transforms into another pseudo-cubic LiFeO₂ is a second decomposition plateau. Correspondingly, the first charging plateau ranges from 3.5 V to 3.8 V; and the second charging plateau ranges from 3.8 V to 4.1 V.

The ranges of the first charging plateau and the second charging plateau are related to a type of the lithium replenishment agent. According to the decomposition stages of different lithium replenishment agent, corresponding a first charging plateau and a second charging plateau are obtained.

In some embodiments, the battery includes a casing, and a positive plate, a negative plate, and a separator that are located in the casing, where the separator is disposed between the positive plate and the negative plate. The casing further includes an electrolyte, where the positive plate, the negative plate, and the separator are immersed in the electrolyte. The lithium replenishment agent is disposed in a positive electrode material layer of the positive plate, or in a negative material layer of the negative plate, or in a material layer of the separator, or in the electrolyte. The location of the lithium replenishment agent in the battery is not limited in some embodiments of the present disclosure.

S102, charging the battery at a first current to form a solid electrolyte interface membrane (SEI).

In the step of forming the SEI, the internal pressure of the battery is represented as an initial negative pressure. The initial negative pressure is -80 Kpa ± 20 Kpa, for example, - 100 Kpa to -90 Kpa, -90 Kpa to -80 Kpa, -80 Kpa to -70 Kpa, or -70 Kpa to -60 Kpa, which may be, for example, -100 Kpa, -95 Kpa, -90 Kpa, -85 Kpa, -80 Kpa, -75 Kpa, -70 Kpa, -65 Kpa, or -60 Kpa. The negative pressure facilitates reducing bubbles in the electrolyte, thereby reducing a side reaction, and preventing interference with the formation of the SEI caused by gas generated from decomposition of the electrolyte. In addition, the negative pressure further improves contact between the electrode and the electrolyte, promoting ions transport, and thus improving quality and stability of the SEI.

The first current ranges from 0.02 C to 0.1 C, for example, 0.02 C to 0.05 C, 0.05 C to 0.08 C, or 0.08 C to 0.1 C, which may be, for example, 0.02 C, 0.04 C, 0.06 C, 0.08 C, or 0.1 C. Higher current density accelerates the formation of the SEI. However, excessively high current density will lead to a non-uniform or overly thick SEI, affecting battery performance. Relatively lower current density facilitates formation of a SEI with more uniformity and compactness.

At the stage of forming the SEI, the battery is charged to 2.0 V to 2.2 V, for example, 2.0 V to 2.03 V, 2.03 V to 2.05 V, 2.05 V to 2.08 V, 2.08 V to 2.1 V, 2.1 V to 2.14 V, 2.14 V to 2.16 V, or 2.16 V to 2.2 V, which may be, for example, 2.0 V, 2.05 V, 2.1 V, 2.16 V, or 2.2 V.

S103, performing a first formation and exhausting gas process, where the battery is charged at a second current to a preset cut-off voltage and subjected subsequently to at least one breathing-like exhausting gas process, where the breathing-like exhausting gas process includes increasing internal pressure of the battery to a first positive pressure and reducing to a first negative pressure, and the preset cut-off voltage is lower than a minimum value of the first charging plateau.

That is, before the battery reaches the first charging plateau, the battery is subjected to at least one the breathing-like exhausting gas process, to exhaust gas generated prior to arrival at the first charging plateau, for example, the gas generated during the SEI formation process. In this way, an impact between the gas accumulated at the previous stages and the gas released by subsequent decomposition of the lithium replenishment agent in the charging plateau, as well as the resulting problem of local electrolyte shortage, are prevented.

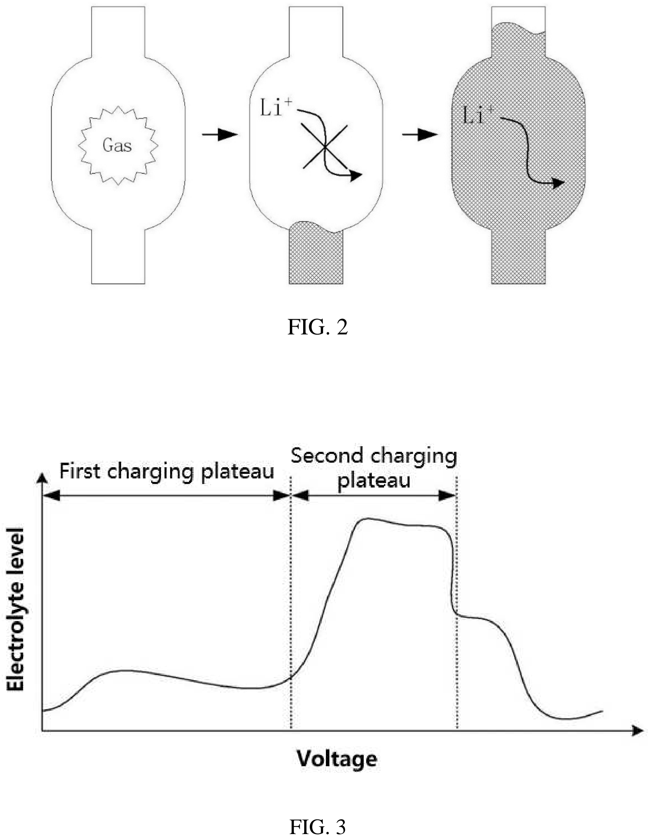

FIG. 2 is a schematic diagram of electrolyte reflux according to some embodiments of the present disclosure.

Referring to FIG. 2, prior to the breathing-like exhausting gas process, a large amount of gas occupies the space inside the battery, hindering lithium ions movement through the electrolyte. During the breathing-like exhausting gas process, the internal pressure of the battery is increased to the first positive pressure and then reduced to the first negative pressure. In this way, the negative pressure is reduced to promote electrolyte reflux, compensating for the local electrolyte shortage caused by excessive negative pressure or an airflow impact. Then, after lowering again to the first negative pressure, the generated gas is exhausted, and the battery is refilled with the electrolyte to establish a lithium ion migration pathway, thereby preventing the problem of interface black spots or lithium plating caused by poor lithium intercalation.

In some embodiments, the second current is greater than the first current. After the SEI is formed, increasing the current density accelerates the charging rate and enhances power performance of the battery to meet requirements of a high-power application. Moreover, higher current density shortens the formation time, improving production efficiency, and reducing a production cost of the battery.

The second current ranges from 0.2 C to 0.4 C, for example, 0.2 C to 0.23 C, 0.23 C to 0.25 C, 0.25 C to 0.3 C, 0.3 C to 0.36 C, or 0.36 C to 0.4 C, which may be, for example, 0.2 C, 0.24 C, 0.26 C, 0.28 C, 0.3 C, 0.33 C, 0.36 C, 0.39 C, or 0.4 C.

In some embodiments, an absolute value of the first positive pressure is less than an absolute value of the first negative pressure. The first positive pressure serves to break a vacuum state in the battery to promote gas movement, facilitating gas exhaust. The absolute value of the first positive pressure is less than the absolute value of the first negative pressure, thus an excessively large pressure difference between the first positive pressure and the first negative pressure, as well as the resulting problems such as abnormal formation or swelling of the battery, are prevented.

The first positive pressure is 0 ± 20 Kpa, for example, -20 Kpa to -10 Kpa, -10 Kpa to 0 Kpa, 0 Kpa to 10 Kpa, or 10 Kpa to 20 Kpa, which may be, for example, -20 Kpa, -15 Kpa, -10 Kpa, -5 Kpa, 0 Kpa, 5 Kpa, 10 Kpa, 15 Kpa, or 20 Kpa. It is to be noted that the first positive pressure refers to a pressure adjusted positively relative to the initial negative pressure, such that the vacuum degree of the first positive pressure is smaller than that of the initial negative pressure. Therefore, the value of the first negative pressure may be negative.

In some embodiments, an absolute value of the first negative pressure is greater than an absolute value of the initial negative pressure. That is, the degree of vacuum of the first negative pressure is larger than that of the initial negative pressure, which facilitates the complete exhaustion of the gas generated prior to arrival at the first charging plateau.

The first negative pressure is -80 Kpa ± 20 Kpa, for example, -100 Kpa to -90 Kpa, -90 Kpa to -80 Kpa, -80 Kpa to -70 Kpa, or -70 Kpa to -60 Kpa, which may be, for example, - 100 Kpa, -95 Kpa, -90 Kpa, -85 Kpa, -80 Kpa, -75 Kpa, -70 Kpa, -65 Kpa, or -60 Kpa.

In some embodiments, the difference between the minimum value of the first charging plateau and the preset cut-off voltage is greater than 0 and less than or equal to 0.5. That is, the cut-off voltage has a smaller difference from the minimum value of the first charging plateau, thereby being prepared for entering subsequent first charging plateau.

The difference between the minimum value of the first charging plateau and the preset cut-off voltage may be, for example, 0.1, 0.2, 0.3, 0.4, or 0.5.

S104, performing an activation process, where the battery is charged continuously at the second current to the minimum value of the first charging plateau.

In some embodiments, in step of performing the activation process, the internal pressure of the battery is represented as a second negative pressure, where an absolute value of the second negative pressure is less than an absolute value of the initial negative pressure. That is, the vacuum degree of the second negative pressure is lower than that of the initial negative pressure, thereby providing an appropriate buffer for subsequent gas generated by the lithium replenishment agent during the first charging plateau, to prevent the problem of local electrolyte shortage caused by an airflow impact between the excessively large negative pressure and a large amount of gas, and preventing the problem of interface black spots or lithium plating caused by poor lithium intercalation.

The second negative pressure is -40 Kpa ± 20 Kpa, for example, -60 Kpa to -50 Kpa, -50 Kpa to -40 Kpa, -40 Kpa to -30 Kpa, or -30 Kpa to -20 Kpa, which may be, for example, - 60 Kpa, -55 Kpa, -50 Kpa, -45 Kpa, -40 Kpa, -35 Kpa, -30 Kpa, -25 Kpa, or -20 Kpa.

S105, performing a second formation and exhausting gas process, where the battery is charged at a third current to the maximum value of the first charging plateau and subjected subsequently to at least one breathing-like exhausting gas process. That is, after the battery completes charging at the first charging plateau, the gas generated at the stage of the first charging plateau is exhausted through the breathing-like exhausting gas process.

In some embodiments, the third current is less than the second current and greater than the first current. That is, an appropriate charging rate is applied throughout the stage of the first charging plateau. An excessively high charging rate leads to a faster gas generation rate, resulting in the problem of an airflow impact generated by a large amount of gas, while an excessively low charging rate leads to a reduced charging efficiency, reducing production efficiency. Therefore, the third current is between the first current and the second current, which facilitates the battery to smoothly get through the second charging plateau.

The third current ranges from 0.1 C to 0.3 C, for example, 0.1 V to 0.15 V, 0.15 V to 0.2 V, 0.2 V to 0.25 V, or 0.25 V to 0.3 V, which may be, for example, 0.1 V, 0.13 V, 0.16 V, 0.18 V, 0.2 V, 0.22 V, 0.25 V, 0.28 V, or 0.3 V.

In some embodiments, during the second formation and exhausting gas process, the internal pressure of the battery is equal to the second negative pressure.

S106, performing a third formation and exhausting gas process, where the battery is charged at the first current to the maximum value of the second charging plateau, while subjecting to at least one breathing-like exhausting gas process. That is, during the stage of the second charging plateau, the battery is subjected to at least one breathing-like exhausting gas process simultaneously. Due to a relatively high gas generation amount of the lithium replenishment agent at the stage of the second charging plateau, the breathing-like exhausting gas process is required to be performed simultaneously with the charging. At the stage of the second charging plateau, the lower first current is employed to slow down a gas generation rate of the lithium replenishment agent, to prevent the problem of gas retention and inability to exhaust caused by accumulation of a large amount of gas in the battery within a short time.

In some embodiments, in the step of the first formation and exhausting gas process, a number of the breathing-like exhausting gas process is represented as a first number of times; in the step of the second formation and exhausting gas process, a number of the breathing-like exhausting gas process is represented as a second number of times; and in the step of the third formation and exhausting gas process, a number of the breathing-like exhausting gas process is represented as a third number of times, where the third number of times is greater than the first number of times, and/or the third number of times is greater than the second number of times. Due to a relatively large amount of gas generated by the lithium replenishment agent at the stage of the second charging plateau, more times of exhaust is required at the stage of the second charging plateau. In addition, the relatively larger third number of times facilitates exhausting gas that not promptly exhausted during the first formation and exhausting gas process or the second formation and exhausting gas process.

The wording "the third number of times is greater than the first number of times and the third number of times is greater than the second number of times" means that the third number of times is greater than the larger one of the first number of times and the second number of times. For example, if the first number of times is 1 and the second number of times is 2, the third number of times is greater than 2. The wording "thethird number of times is greater than the first number of times or the third number of times is greater than the second number of times" means that regardless of which one of the first number of times and the second number of times is larger, the third number of times may be greater than only the first number of times or only the second number of times. For example, if the first number of times is 1 and the second number of times is 2, the third number of times may be greater than or equal to 2.

In some embodiments, the ratio of the third number of times to the second number of times is represented as a first ratio. The gas generation amount of the lithium replenishment agent at the first charging plateau is represented as a first gas generation amount, the gas generation amount of the lithium replenishment agent at the second charging plateau is represented as a second gas generation amount, and the ratio of the second gas generation amount to the first gas generation amount is represented as a second ratio. The first ratio is greater than or equal to the second ratio. That is, the third number of times is set depending on a magnitude relationship between the gas generation amounts during the first charging plateau and the second charging plateau. Taking Li₅FeO₄ as an example, in theory, the gas generation amount at the stage of the second charging plateau is three times the gas generation amount at the stage of the first charging plateau. However, due to other side reactions, an actual gas generation amount at the stage of the second charging plateau may be up to about 7 times to 10 times the gas generation amount at the stage of the first charging plateau. Given this, the third number of times is set to a larger number with reference to the ratio of the second gas generation amount to the first gas generation amount, which facilitates exhausting the gas generated at the stage of the second charging plateau and also the gas generated by other side reactions.

In some embodiments, during the third formation and exhausting gas process, the internal pressure of the battery is equal to the second negative pressure.

S107, charging the battery at the third current to a cut-off voltage.

In some embodiments, during charging the battery at the third current to a cut-off voltage, the internal pressure of the battery is equal to the first negative pressure. In this time, the formation process of the battery is approaching the final stage, and the gas generated in the battery decreases significantly. Then, the internal pressure of the battery is reduced to the first negative pressure with a higher degree of vacuum, enabling the battery to be fully filled with the electrolyte.

In some embodiments, a difference between the cut-off voltage and the maximum value of the second charging plateau is greater than 0 and less than or equal to 0.5, which may be, for example, 0.1, 0.2, 0.3, 0.4, or 0.5.

In the preparation method for a secondary battery provided in some embodiments of the present disclosure, the initial charging process of the secondary battery is divided into several stages depending on the charging plateaus corresponding to decomposition plateaus of the lithium replenishment agent. The breathing-like exhausting gas process is performed respectively for different stages, to ensure that gas generated at each stages is promptly exhausted from the battery, and thus ensuring sufficient infiltration of electrolyte into electrode plate, and preventing interface defects caused by gas generation, such as black spots or lithium plating. The voltage range corresponding to the lithium replenishment agent reaching the first decomposition plateau is represented as the first charging plateau, and the voltage range corresponding to the lithium replenishment agent reaching the second decomposition plateau is represented as the second charging plateau. Before the battery is charged to the first charging plateau, a SEI is formed, and then the battery is charged to the preset cut-off voltage closed to the minimum value of the first charging plateau. Then, the battery is subjected to at least one the breathing-like exhausting gas process to exhaust gas generated during the previous SEI formation process. From the activation process to completing the stage of the first charging plateau, the battery is subjected to at least one the breathing-like exhausting gas process to exhaust gas generated at the stage of the first charging plateau. During the stage of the second charging plateau, least one the exhausting gas process is performed, where the generated gas is exhausted in real time as the stage of the second charging plateau progresses. Due to different gas generation situations at different stages, the first charging process of the secondary battery is divided into several stages depending on the first charging plateau and the second charging plateau, enabling targeted breathing-like exhausting gas processes to be performed at different stages, thereby ensuring fully smooth progress of each stage, and preventing influence caused by gas generation at each stage.

Correspondingly, some other embodiments of the present disclosure further provide a secondary battery, which is prepared by using the preparation method for a secondary battery according to the foregoing embodiments. The secondary battery includes a lithium iron phosphate battery, a lithium manganese oxide battery, a lithium nickelate battery, a ternary lithium battery, or a lithium iron manganese phosphate battery.

Correspondingly, some still other embodiments of the present disclosure further provide an energy storage system, including a plurality of secondary batteries according to the foregoing embodiments.

Correspondingly, some yet other embodiments of the present disclosure further provide a power supply device, where the power supply device includes the secondary battery according to the foregoing embodiments or the energy storage system according to the foregoing embodiments.

The following are specific examples of the present disclosure.

Battery 1: Li₅FeO₄ as a lithium replenishment agent included in electrolyte, with a first charging plateau ranging from 3.5 V to 3.8 V and a second charging plateau ranging from 3.8 V to 4.1 V, correspondingly.

The battery 1 was charged for the first time by using the following steps.
1. the battery 1 was charged at a current of 0.02 C to 0.1 C to 2.2 V to form a SEI, with a duration of 2 h to 3 h, and an internal pressure of the battery of -80 Kpa ± 20 Kpa;
2. the battery 1 was charged at a current of 0.2 C to 0.4 C to 3.3 V, and then subjected to a breathing-like exhausting gas process for once, where the internal pressure of the battery 1 was increased to 0 Kpa ± 20 Kpa and then reduced to -80 Kpa ± 20 Kpa;
3. the internal pressure of the battery 1 was adjusted to -40 Kpa ± 20 Kpa, and the battery 1 was then charged at the current of 0.2 C to 0.4 C to 3.5 V to 3.65 V;
4. the battery 1 was charged at a current of 0.1 C to 0.3 C to 3.8 V, and then subjected to a breathing-like exhausting gas process for once, and then the internal pressure of the battery 1 was adjusted to -40 Kpa ± 20 Kpa;
5. the battery 1 was charged at a current of 0.02 C to 0.1 C to 4.1 V, and subjected simultaneously to a breathing-like exhausting gas process for three times, where the internal pressure of the battery 1 was adjusted to -40 Kpa ± 20 Kpa after completion of each the breathing-like exhausting gas process; and
6. the internal pressure of the battery 1 was adjusted to -80 Kpa ± 20 Kpa, and the battery 1 was charged at a current of 0.1 C to 0.3 C to 4.2 V.

A battery 2 was charged for the initial charging process in the same way as battery 1, without any breathing-like exhausting gas process.

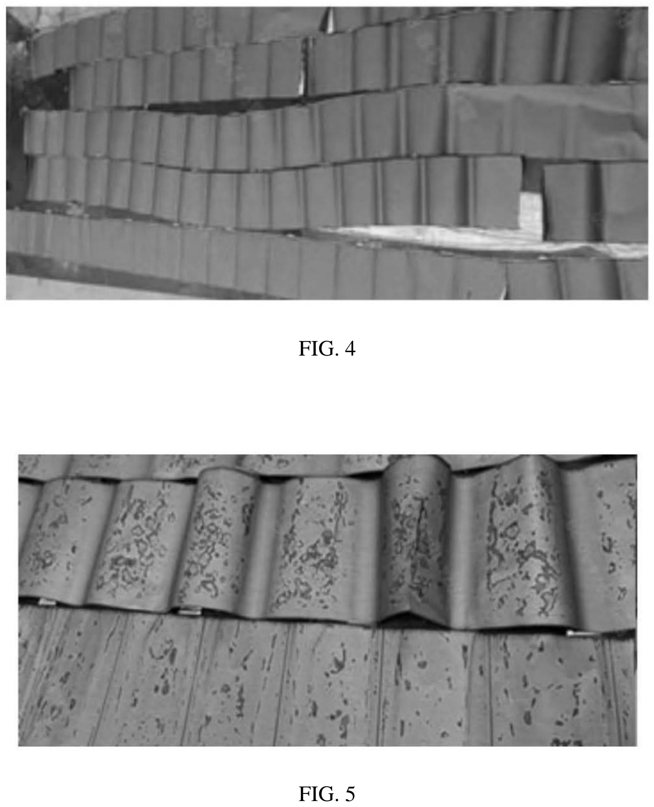

FIG. 3 is a trend chart of electrolyte level changes in the initial charging process of battery 1; FIG. 4 is a schematic diagram of an interface of negative electrode of battery 1; and FIG. 5 is a schematic diagram of an interface of negative electrode of battery 2.

From FIG. 3, it can be seen that during the charging of the battery 1 to the first charging plateau, the electrolyte level tends to a slight rising; and during the charging of the battery 1 to the second charging plateau, the electrolyte level shows a clear rising. After the stage of the first charging plateau, the breathing-like exhausting gas process was performed for once to remove gas generated at the previous stages, preventing the problem of an impact between the large amount of gas generated subsequently and the gas retained previously. The breathing-like exhausting gas process was performed for three times during the stage of the second charging plateau, to exhaust the gas generated by the lithium replenishment agent in real time during the stage of the second charging plateau, to facilitate stable progress of the stage of the second charging plateau. Comparing FIG. 4 and FIG. 5, it can be seen that FIG. 4 shows a significant improvement in black spots compared to FIG. 5. The black spots lead to the problem of poor local lithium intercalation, resulting in significant loss of a battery capacity (about 15% or more), and further resulting in lithium plating in subsequent cycles to lead to a sharp degradation of the capacity retention rate of the battery. In the preparation method for a secondary battery provided in some embodiments of the present disclosure, the breathing-like exhausting gas process is performed for several times during the initial charging process of the battery based on activation characteristics of the lithium replenishment agent, which significantly reduce the influence caused by gas generation of the lithium replenishment agent on the interface of a negative electrode.

For different lithium replenishment agents, different stages are required to be divided based on characteristics of the lithium replenishment agents, and a charging current, air pressure, and a number of times of the breathing-like exhausting gas process at the corresponding stages are adjusted. For example, taken lithium trifluoromethanesulfonate as the lithium replenishment agent in the battery as an example, and the steps for the initial charging thereof were as follows:
1. the battery was charged at a current of 0.05 C to 0.1 C to 1.8 V to form a SEI, with a duration of 2 h to 3 h, and an internal pressure of the battery of -80 Kpa ± 20 Kpa;
2. the battery was charged at a current of 0.05 C to 0.1 C to 2.0 V, and then subjected to abreathing-like exhausting gas process for once, where the internal pressure of the battery 1 was increased to 0 Kpa ± 20 Kpa and then reduced to -80 Kpa ± 20 Kpa;
3. the internal pressure of the battery was adjusted to -40 Kpa ± 20 Kpa, and the battery was then charged at the current of 0.05 C to 0.1 C to 2.5 V, during which the breathing-like exhausting gas process was performed for 3 times to 5 times;
4. the internal pressure of the battery was adjusted to -20 Kpa to 0 Kpa, and the battery was charged at a current of 0.2 C to 0.5 C to 3.6 V;
5. the battery was charged to 4.0 V at a rate of 0.1 V per 10 minutes, and within the period from 3.8 V to 4.0 V, the battery was subjected to the breathing-like exhausting gas process for 5 times to 8 times; and
6. the battery was charged at a current of 0.1 C to 0.3 C to 4.2 V, then adjusted to 0 Kpa of the internal pressure and stood for 2 h to 4 h.

Those of ordinary skill in the art may understand that the foregoing embodiments are specific examples for implementing the present disclosure, and in actual applications, various changes may be made thereto in form and detail without departing from the spirit and scope of the present disclosure. Any person skilled in the art may make various changes and modifications without departing from the spirit and scope of the present disclosure. Therefore, the protection scope of the present disclosure shall be based on the scope defined by the claims.

## Claims

1. A preparation method for a secondary battery, **characterized in that** the preparation method comprises:
providing a battery, wherein the battery comprises a lithium replenishment agent with a first charging plateau and a second charging plateau, the first charging plateau refers to a voltage range corresponding to the lithium replenishment agent reaching a first decomposition plateau, the second charging plateau refers to voltage range corresponding to the lithium replenishment agent reaching a second decomposition plateau, and a minimum value of the second charging plateau is greater than or equal to a maximum value of the first charging plateau;
charging the battery at a first current to form a SEI;
performing a first formation and exhausting gas process, wherein the battery is charged at a second current to a preset cut-off voltage and subjected subsequently to at least one breathing-like exhausting gas process, wherein the breathing-like exhausting gas process comprises increasing internal pressure of the battery to a first positive pressure and reducing to a first negative pressure, and the preset cut-off voltage is lower than a minimum value of the first charging plateau;
performing an activation process, wherein the battery is charged continuously at the second current to the minimum value of the first charging plateau;
performing a second formation and exhausting gas process, wherein the battery is charged at a third current to the maximum value of the first charging plateau and subjected subsequently to at least one breathing-like exhausting gas process;
performing a third formation and exhausting gas process, wherein the battery is charged at the first current to the maximum value of the second charging plateau, while subjecting to at least one breathing-like exhausting gas process; and
charging the battery at the third current to a cut-off voltage.

2. The preparation method for a secondary battery according to claim 1, **characterized in that** the lithium replenishment agent comprises at least one of Li₅FeO₄, Li₂NiO₂, Li₂O₂, and lithium trifluoromethanesulfonate.

3. The preparation method for a secondary battery according to claim 1 or 2, **characterized in that**
in the step of the first formation and exhausting gas process, a number of the breathing-like exhausting gas process is represented as a first number of times;
in the step of the second formation and exhausting gas process, a number of the breathing-like exhausting gas process is represented as a second number of times; and
in the step of the third formation and exhausting gas process, a number of the breathing-like exhausting gas process is represented as a third number of times,
wherein the third number of times is greater than the first number of times, and/or the third number of times is greater than the second number of times.

4. The preparation method for a secondary battery according to claim 3, **characterized in that**
a ratio of the third number of times to the second number of times is represented as a first ratio; and
a gas generation amount of the lithium replenishment agent at the first charging plateau is represented as a first gas generation amount, a gas generation amount of the lithium replenishment agent at the second charging plateau is represented as a second gas generation amount, and a ratio of the second gas generation amount to the first gas generation amount is represented as a second ratio,
wherein the first ratio is greater than or equal to the second ratio.

5. The preparation method for a secondary battery according to any one of claims 1 to 4, **characterized in that** a difference between the minimum value of the first charging plateau and the preset cut-off voltage is greater than 0 and less than or equal to 0.5.

6. The preparation method for a secondary battery according to any one of claims 1 to 5, **characterized in that** in step of forming the SEI, the internal pressure of the battery is represented as an initial negative pressure; and in step of performing the activation process, the internal pressure of the battery is represented as a second negative pressure, wherein an absolute value of the second negative pressure is less than an absolute value of the initial negative pressure.

7. The preparation method for a secondary battery according to claim 6, **characterized in that** the initial negative pressure is -80 Kpa ± 20 Kpa; and the second negative pressure is -40 Kpa ± 20 Kpa.

8. The preparation method for a secondary battery according to any one of claims 1 to 7, **characterized in that** the second current is greater than the first current.

9. The preparation method for a secondary battery according to claim 8, **characterized in that** the third current is less than the second current and greater than the first current.

10. The preparation method for a secondary battery according to claim 9, **characterized in that** the first current ranges from 0.02 C to 0.1 C; the second current ranges from 0.2 C to 0.4 C; and the third current ranges from 0.1 C to 0.3 C.

11. The preparation method for a secondary battery according to any one of claims 1 to 10, **characterized in that** an absolute value of the first positive pressure is less than an absolute value of the first negative pressure.

12. The preparation method for a secondary battery according to claim 11, **characterized in that** the first positive pressure is 0 Kpa ± 20 Kpa; and the first negative pressure is -80 Kpa ± 20 Kpa.

13. A secondary battery, **characterized in that** the secondary battery is prepared by using the preparation method for a secondary battery according to any one of claims 1 to 12.

14. An energy storage system, **characterized in that** the energy storage system comprises a plurality of secondary batteries according to claim 13.

15. A power supply device, **characterized in that** the power supply device comprises the secondary battery according to claim 13; or the energy storage system according to claim 14.
